# EUROPÄISCHE PATENTSCHRIFT

(11) **EP 2 744 321 B1**
(45) Veröffentlichungstag und Bekanntmachung des Hinweises auf die Patenterteilung: **01.11.2017**
(21) Anmeldenummer: 12740933.2
(22) Anmeldetag: 20.07.2012
(51) Int. Cl.: A01B 59/041

(54) **STABILISATOR FÜR EINEN UNTERLENKER EINES DREIPUNKTGERÄTEANBAUS EINES TRAKTORS**
STABILIZER FOR A LOWER LINK OF A THREE-POINT HITCH OF A TRACTOR
STABILISATEUR POUR BARRE D'ATTELAGE INFÉRIEURE D'UN ATTELAGE TROIS POINTS DE TRACTEUR

(30) Priorität: 19.08.2011 DE 102011081272
(43) Veröffentlichungstag der Anmeldung: 25.06.2014
(60) Teilanmeldung: 17164983.3
(73) Patentinhaber: Deere & Company, Moline, IL 61265 (US)
(72) Erfinder: ONKEN, Hanko, 68239 Mannheim (DE); HEITLINGER, Martin, 76684 Östringen (DE)
(74) Vertreter: Dehnhardt, Florian Christopher
(86) Internationale Anmeldenummer: PCT/EP2012/064253
(87) Internationale Veröffentlichungsnummer: WO 2013/026638

(56) Entgegenhaltungen:
- EP-A1- 1 342 399
- DE-A1-102009 001 907

## Beschreibung

Die Erfindung betrifft einen Stabilisator für einen Unterlenker eines Dreipunktgeräteanbaus eines Traktors, mit einem ersten Stabilisatorglied und einem mit dem ersten Stabilisatorglied federbeweglich verbundenen zweiten Stabilisatorglied, wobei sich das zweite Stabilisatorglied gegenüber dem ersten Stabilisatorglied zur Anpassung der Stabilisatorlänge verdrehen lässt, mit einem schwenkbar an dem ersten Stabilisatorglied angelenkten Sicherungsbügel, der zur Verdrehsicherung der beiden Stabilisatorglieder mit einem am Umfang des zweiten Stabilisatorglieds ausgebildeten Sicherungsschlitz in Eingriff bringbar ist, und mit einer Sperrklappe, die zur Blockierung einer zwischen den Stabilisatorgliedern auftretenden Federbewegung in eine geschlossene Stellung schwenkbar ist.

Ein derartiger Stabilisator mit einem ersten und einem zweiten Stabilisatorglied geht beispielsweise aus der DE 10 2009 001 907 A1 hervor. Der Stabilisator umfasst neben einer Sperrklappe, die sich zur Einschränkung einer zwischen den beiden Stabilisatorgliedern auftretenden Federbewegung in eine geschlossene Stellung schwenken lässt, einen schwenkbaren Sicherungsbügel, mittels dessen ein gegenseitiges Verdrehen der beiden Stabilisatorglieder sowie eine damit verbundene Verstellung der Gesamtlänge des Stabilisators unterbunden werden kann. Eine in der Sperrklappe ausgebildete Aussparung erlaubt eine Bedienung des Sicherungsbügels auch bei in der geschlossenen Stellung befindlicher Sperrklappe, was es ermöglicht, einen mit dem Stabilisator ausgestatteten Unterlenker bei angebrachtem Anbaugerät von Hand zu verspannen. Da der Stabilisator aufgrund seiner bodennahen Anbringung im Bereich der Unterlenker gerade während der Feldarbeit vergleichsweise hohen Verschmutzungen ausgesetzt ist, besteht die Möglichkeit, dass sich diese innerhalb der Aussparung ablagern und die Bedienbarkeit des Sicherungsbügels unerwünscht beeinträchtigen.

Es ist daher Aufgabe der vorliegenden Erfindung, einen Stabilisator der eingangs genannten Art bezüglich seiner Bedienbarkeit unter widrigen Umgebungsbedingungen weiter zu verbessern.

Diese Aufgabe wird durch einen Stabilisator mit den Merkmalen des Patentanspruchs 1 gelöst.

Der Stabilisator für einen Unterlenker eines Dreipunktgeräteanbaus eines Traktors umfasst ein erstes Stabilisatorglied und ein mit dem ersten Stabilisatorglied federbeweglich verbundenes zweites Stabilisatorglied, wobei sich das zweite Stabilisatorglied gegenüber dem ersten Stabilisatorglied zur Anpassung der Stabilisatorlänge verdrehen lässt. Ein schwenkbar an dem ersten Stabilisatorglied angelenkter Sicherungsbügel ist zur Verdrehsicherung der beiden Stabilisatorglieder mit einem am Umfang des zweiten Stabilisatorglieds ausgebildeten Sicherungsschlitz in Eingriff bringbar. Des Weiteren ist eine Sperrklappe vorgesehen, die zur Blockierung einer zwischen den Stabilisatorgliedern auftretenden Federbewegung in eine geschlossene Stellung schwenkbar ist. Ein dem Sicherungsbügel in Schwenkrichtung zugewandter Sperrklappenabschnitt ist derart ausgeformt, dass sich der Sicherungsbügel unter Freigabe des zweiten Stabilisatorglieds zum Verspannen eines mit dem Stabilisator ausgestatten Unterlenkers auch dann aus dem Sicherungsschlitz herausschwenken lässt, wenn sich die Sperrklappe in der geschlossenen Stellung befindet. Da der Sperrklappenabschnitt den Sicherungsbügel schützend verdeckt, ist ein Zusetzen aufgrund von sich ablagernden Verschmutzungen oder dergleichen weitgehend ausgeschlossen.

Vorteilhafte Ausführungen des erfindungsgemäßen Stabilisators gehen aus den Unteransprüchen hervor.

Vorzugsweise ist der Sicherungsbügel derart an dem ersten Stabilisatorglied angelenkt, dass dieser unter Vorspannung stehend in den Sicherungsschlitz gepresst wird. Auf diese Weise ist selbst bei Auftreten fahrtbedingter Erschütterungen eine verlässliche Verdrehsicherung der beiden Stabilisatorglieder gegeben.

Zusätzlich kann der Sicherungsbügel derart an dem ersten Stabilisatorglied angelenkt sein, dass sich die Wirkrichtung der Vorspannung beim Herausschwenken des Sicherungsbügels umkehrt, wenn ein vorgegebener Schwenkwinkel überschritten wird. Mit anderen Worten wird der Sicherungsbügel bei Überschreiten des vorgegebenen Schwenkwinkels von selbst in eine das zweite Stabilisatorglied freigebende Stellung gedrängt, sodass der Bediener beide Hände zum Verspannen eines mit dem Stabilisator ausgestatteten Unterlenkers frei hat. Der dem Sicherungsbügel zugewandte Sperrklappenabschnitt bildet hierbei letztlich einen die Schwenkbewegung begrenzenden Anschlag. Dieser kann insbesondere die Form einer sich in Anlenkungsrichtung des Sicherungsbügels verjüngenden Einbuchtung aufweisen.

Um eine Reinigung des Stabilisators zu vereinfachen, besteht die Möglichkeit, dass die Sperrklappe mittels des Sicherungsbügels in einer vollständig geöffneten Stellung arretierbar ist. Hierzu lässt sich die Sperrklappe auf dem freien Ende des Sicherungsbügels abstützen.

Der Sicherungsschlitz ist insbesondere in Richtung einer zwischen dem ersten Stabilisatorglied und dem zweiten Stabilisatorglied auftretenden Federbewegung orientiert. Der Sicherungsschlitz ist derart bemessen, dass dieser ein an dem Sicherungsbügel vorgesehenes Arretiersegment vollständig aufnimmt. Da der Sicherungsbügel entlang des Sicherungsschlitzes zu gleiten vermag, wird eine zwischen den beiden Stabilisatorgliedern auftretende Federbewegung nicht behindert.

Ferner kann der Sicherungsschlitz in einer am Umfang des zweiten Stabilisatorglieds ausgeformten Verriegelungsnase ausgebildet sein. Die Verriegelungsnase ist an dem zweiten Stabilisatorglied derart angeordnet, dass diese von der Sperrklappe vollständig verdeckt wird, wenn sich die Sperrklappe in der geschlossenen Stellung befindet. Eine Ablagerung unerwünschter Verschmutzungen im Bereich des Sicherungsschlitzes kann auf diese Weise von vornherein ausgeschlossen werden.

Zur Verringerung des Fertigungsaufwands kann die Verriegelungsnase einstückiger Bestandteil des als Guss- und/oder Schmiedeteil ausgebildeten zweiten Stabilisatorglieds sein. Es ist jedoch auch vorstellbar, dass die Verriegelungsnase als separates Bauteil an dem zweiten Stabilisatorglied angeschweißt oder anderweitig angebracht ist. Handelt es sich um ein separates Bauteil, so kann die Verriegelungsnase zur Erhöhung der Verschleißfestigkeit aus einer gegenüber dem zweiten Stabilisatorglied härteren bzw. gehärteten Stahllegierung bestehen.

Um ein mehrstufiges Verspannen eines mit dem Stabilisator ausgestatteten Unterlenkers zu ermöglichen, können insgesamt vier Verriegelungsnasen kreuzförmig am Umfang des zweiten Stabilisatorglieds ausgeformt sein. Die Verwendung von insgesamt vier Verriegelungsnasen hat sich als besonders praktikabel herausgestellt. Die Verriegelungsnasen können zur Erhöhung der Steifigkeit zusätzlich durch bogenförmige Versteifungsrippen miteinander verbunden sein.

Zur Blockierung einer zwischen den beiden Stabilisatorgliedern auftretenden Federbewegung besteht die Möglichkeit, dass eine an der Sperrklappe vorgesehene Ausnehmung zumindest eine der Verriegelungsnasen in der geschlossenen Stellung beidseitig in Eingriff nimmt. Insbesondere kann die Sperrklappe zwei gegenüberliegende Sperrwangen aufweisen, von denen jede eine entsprechende Ausnehmung zur Ineingriffnahme einer zugehörigen Verriegelungsnase aufweist.

Des Weiteren ist es denkbar, dass der Sicherungsbügel zur Erleichterung einer Einfingerbetätigung an seinem freien Ende einen ösenförmig aufgeweiteten Griffbereich aufweist. Der ösenförmig aufgeweitete Griffbereich ragt an der Sperrklappe derart hervor, dass dieser von außen ohne Weiteres mit der Hand zugänglich ist. Der insbesondere als Federbügel ausgebildete Sicherungsbügel ist aus einer rostfreien oder in vergleichbarer Weise oberflächenvergüteten Stahllegierung hergestellt.

Der erfindungsgemäße Stabilisator wird im Folgenden anhand der beigefügten Zeichnungen näher erläutert. Es sind unterschiedliche Betriebszustände ein und desselben Ausführungsbeispiels wiedergegeben. Hinsichtlich ihrer Funktion übereinstimmende bzw. vergleichbare Komponenten sind mit identischen Bezugszeichen gekennzeichnet. Es zeigen:
- Fig. 1: eine perspektivische Ansicht eines Ausführungsbeispiels des erfindungsgemäßen Stabilisators für einen Unterlenker eines Dreipunktgeräteanbaus eines Traktors,
- Fig. 2: eine erste Schnittdarstellung des in Fig. 1 wiedergegebenen Ausführungsbeispiels des erfindungsgemäßen Stabilisators, und
- Fig. 3: eine zweite Schnittdarstellung des in Fig. 1 wiedergegebenen Ausführungsbeispiels des erfindungsgemäßen Stabilisators.

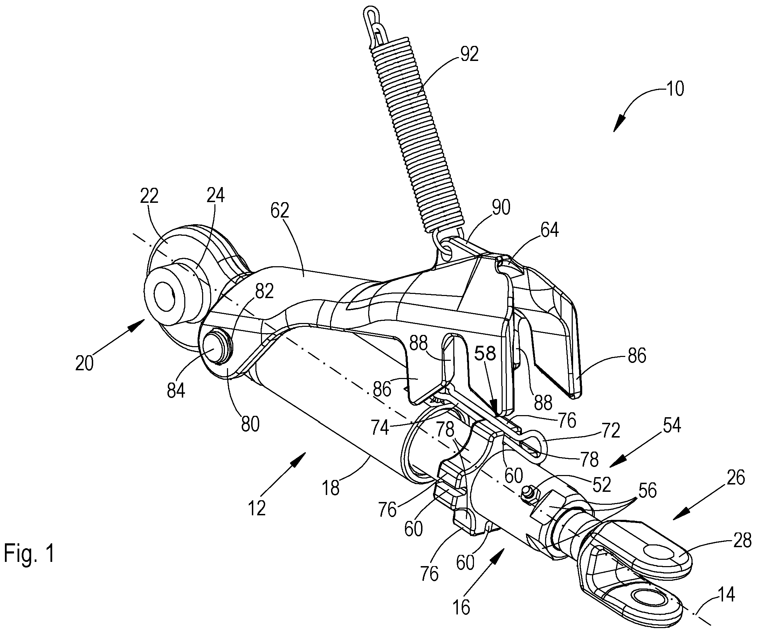

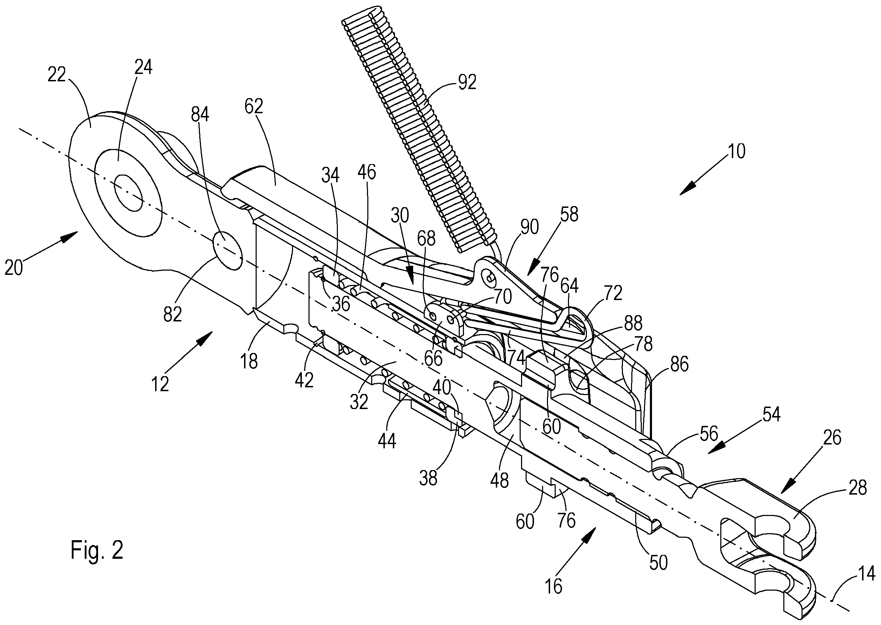

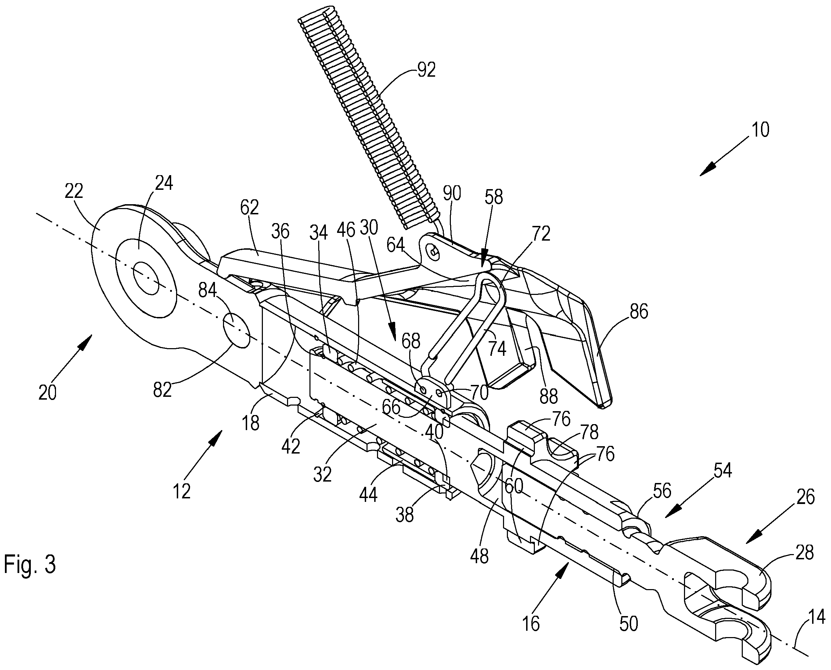

Fig. 1 zeigt eine perspektivische Ansicht eines Ausführungsbeispiels des erfindungsgemäßen Stabilisators für einen Unterlenker eines Dreipunktgeräteanbaus eines Traktors, wobei bezüglich konstruktiver Einzelheiten auf die beiden Schnittdarstellungen in Fig. 2 und 3 verwiesen sei.

Der Stabilisator 10 umfasst ein erstes Stabilisatorglied 12 und ein entlang einer gemeinsamen Längsachse 14 mit dem ersten Stabilisatorglied 12 federbeweglich verbundenes zweites Stabilisatorglied 16, wobei sich das zweite Stabilisatorglied 16 gegenüber dem ersten Stabilisatorglied 12 zur Anpassung der Stabilisatorlänge in Bezug auf die gemeinsame Längsachse 14 verdrehen lässt. Bei dem ersten Stabilisatorglied 12 handelt es sich um ein im Wesentlichen zylindrisches Stabilisatorgehäuse 18, innerhalb dessen das zweite Stabilisatorglied 16 geführt ist.

Zur Herstellung einer traktorseitigen Gelenkverbindung umfasst das erste Stabilisatorglied 12 ein Kugelauge 20. Das Kugelauge 20 besteht aus einer in einem Befestigungsbereich des ersten Stabilisatorglieds 12 ausgeformten Befestigungsöse 22 sowie einer darin drehbar gelagerten Befestigungskugel 24, die eine räumliche Bewegung des Stabilisators 10 gegenüber dem Traktor erlaubt.

Weiterhin umfasst das zweite Stabilisatorglied 16 einen Befestigungsschenkel 26 zur Herstellung einer Gelenkverbindung mit einem Unterlenker eines Dreipunktgeräteanbaus. Der Befestigungsschenkel 26 weist eine an dem Unterlenker anbringbare Befestigungsgabel 28 auf, wobei die mittels der Befestigungsgabel 28 mit dem Unterlenker herstellbare Gelenkverbindung gegenüber der traktorseitigen Gelenkverbindung in montiertem Zustand derart senkrecht angelenkt ist, dass der Stabilisator 10 sowohl horizontalen als auch vertikalen Auslenkungen des Unterlenkers folgen kann.

Beispielsgemäß ist das zweite Stabilisatorglied 16 als Federkolben 30 ausgebildet. Wie sich den Schnittdarstellungen des Stabilisators 10 in Fig. 2 und 3 entnehmen lässt, weist der Federkolben 30 einen Kolbenabschnitt 32 mit reduziertem Durchmesser auf, an dem ein erster Anschlagring 34 in einem ersten Endbereich gleitend angebracht ist. Der erste Anschlagring 34 ist mittels eines Federrings 36, der in eine an dem Kolbenabschnitt 32 umfangsmäßig ausgebildete Nut eingreift, gesichert. Des Weiteren ist ein zweiter Anschlagring 38 in einem zweiten Endbereich gleitend angebracht. Der zweite Anschlagring 38 stützt sich an einem an dem Federkolben 30 ausgebildeten Kragen 40 ab. Ein in das Stabilisatorgehäuse 18 eingebrachter Sprengring 42 sowie ein Abstandshalter 44 dienen der Begrenzung einer an dem Federkolben 30 auftretenden Ein- und Ausfederbewegung. Zwischen den beiden Anschlagringen 34 und 38 erstreckt sich eine den Kolbenabschnitt 32 umgebende Schraubenfeder 46. Die Schraubenfeder 46 wird mittels der beiden Anschlagringe 34 und 38 derart komprimiert bzw. vorgespannt, dass der Federkolben 30 in eine vorgegebene Ruhestellung gedrängt wird. Auf diese Weise ist eine Selbstzentrierung eines mit dem Stabilisator 10 ausgestatteten Unterlenkers gewährleistet.

Ein innerhalb des zweiten Stabilisatorglieds 16 ausgebildetes Innengewinde 48 greift an einem an dem Befestigungsschenkel 26 ausgebildeten Außengewinde 50 derart ein, dass die Stabilisatorlänge durch Verdrehen des zweiten Stabilisatorglieds 16 gegenüber dem ersten Stabilisatorglied 12 anpassbar bzw. verstellbar ist. Ein an dem zweiten Stabilisatorglied 16 vorgesehener Schmiernippel 52 erlaubt hierbei ein Abschmieren der Gewindegänge mit Lagerfett.

Zur Drehbetätigung des zweiten Stabilisatorglieds 16 ist eine Werkzeugaufnahme 54 vorgesehen. Die Werkzeugaufnahme 54 weist mehrere zur Aufnahme eines Maulschlüssels vorgesehene Abflachungen 56 auf, sodass durch Umsetzen des Maulschlüssels selbst unter beengten Platzverhältnissen eine problemlose Verstellung der Stabilisatorlänge möglich ist.

Es sei angemerkt, dass die Darstellung des ersten Stabilisatorglieds 12 als im Wesentlichen zylindrisches Stabilisatorgehäuse 18 lediglich beispielhaften Charakter hat. Vielmehr ist auch eine Vielzahl anderer Gehäuseformen denkbar.

Um eine unbeabsichtigte Verstellung der Stabilisatorlänge zu verhindern, ist ein schwenkbar an dem ersten Stabilisatorglied 12 angelenkter Sicherungsbügel 58 vorgesehen, der zur Verdrehsicherung der beiden Stabilisatorglieder 12 und 16 mit einem am Umfang des zweiten Stabilisatorglieds 16 ausgebildeten Sicherungsschlitz 60 in Eingriff bringbar ist. Der im vorliegenden Fall als Federbügel ausgebildete Sicherungsbügel 58 ist derart an dem ersten Stabilisatorglied 12 angelenkt, dass dieser unter Vorspannung stehend in den Sicherungsschlitz 60 gepresst wird. Auf diese Weise ist selbst bei Auftreten fahrtbedingter Erschütterungen eine verlässliche Verdrehsicherung der beiden Stabilisatorglieder 12 und 16 gegeben. Die Vorspannung ist derart bemessen, dass eine werkzeuglose Betätigung des Sicherungsbügels 58 möglich bleibt.

Des Weiteren ist eine Sperrklappe 62 vorhanden, die zur Blockierung einer zwischen den Stabilisatorgliedern 12 und 16 auftretenden Federbewegung in eine in Fig. 2 dargestellte geschlossene Stellung schwenkbar ist. Ein dem Sicherungsbügel 58 in Schwenkrichtung zugewandter Sperrklappenabschnitt 64 ist derart ausgeformt, dass sich der Sicherungsbügel 58 unter Freigabe des zweiten Stabilisatorglieds 16 zum Verspannen eines mit dem Stabilisator 10 ausgestatteten Unterlenkers auch dann aus dem Sicherungsschlitz 60 herausschwenken lässt, wenn sich die Sperrklappe 62 in der geschlossenen Stellung befindet.

Eine an dem ersten Stabilisatorglied 12 angeordnete Befestigungslasche 66 dient der Halterung des Sicherungsbügels 58. Die Befestigungslasche 66 weist zwei in Richtung der gemeinsamen Längsachse 14 beabstandete Querbohrungen 68 und 70 auf, wobei jede der beiden Querbohrungen 68 und 70 eines der offenen Enden des Sicherungsbügels 58 aufnimmt. Der aus einer rostfreien oder in vergleichbarer Weise oberflächenvergüteten Stahllegierung hergestellte Sicherungsbügel 58 ist derart an dem ersten Stabilisatorglied 12 angelenkt, dass sich die Wirkrichtung der Vorspannung beim Herausschwenken des Sicherungsbügels 58 umkehrt, wenn ein vorgegebener Schwenkwinkel überschritten wird. Mit anderen Worten wird der Sicherungsbügel 58 bei Überschreiten des vorgegebenen Schwenkwinkels von selbst in eine das zweite Stabilisatorglied 16 freigebende Stellung gedrängt, sodass der Bediener beide Hände zum Verspannen eines mit dem Stabilisator 10 ausgestatteten Unterlenkers frei hat. Der dem Sicherungsbügel 58 zugewandte Sperrklappenabschnitt 64 bildet hierbei letztlich einen die Schwenkbewegung begrenzenden Anschlag. Dieser weist im vorliegenden Fall die Form einer sich in Anlenkungsrichtung des Sicherungsbügels 58 verjüngenden Einbuchtung auf.

Zur Erleichterung einer Einfingerbetätigung weist der Sicherungsbügel 58 an seinem freien Ende einen ösenförmig aufgeweiteten Griffbereich 72 auf. Der ösenförmig aufgeweitete Griffbereich 72 ragt an der Sperrklappe 62 derart hervor, dass dieser von außen ohne Weiteres mit der Hand zugänglich ist.

Um eine Reinigung des Stabilisators 10 zu vereinfachen, besteht die Möglichkeit, die Sperrklappe 62 mittels des Sicherungsbügels 58 in einer vollständig geöffneten Stellung zu arretieren. Entsprechend der Darstellung in Fig. 3 lässt sich hierzu die Sperrklappe 62 auf dem freien Ende des Sicherungsbügels 58 abstützen.

Der Sicherungsschlitz 60 ist in Richtung einer zwischen dem ersten Stabilisatorglied 12 und dem zweiten Stabilisatorglied 16 auftretenden Federbewegung orientiert. Der Sicherungsschlitz 60 ist derart bemessen, dass dieser ein an dem Sicherungsbügel 58 vorgesehenes Arretiersegment 74 vollständig aufnimmt. Da der Sicherungsbügel 58 entlang des Sicherungsschlitzes 60 zu gleiten vermag, wird eine zwischen den beiden Stabilisatorgliedern 12 und 16 auftretende Federbewegung nicht behindert.

Wie in Fig. 1 zu erkennen ist, ist der Sicherungsschlitz 60 in einer am Umfang des zweiten Stabilisatorglieds 16 ausgeformten Verriegelungsnase 76 ausgebildet. Die Verriegelungsnase 76 ist an dem zweiten Stabilisatorglied 16 derart angeordnet, dass diese in der in Fig. 2 dargestellten geschlossenen Stellung der Sperrklappe 62 vollständig verdeckt wird. Eine Ablagerung unerwünschter Verschmutzungen im Bereich des Sicherungsschlitzes 60 kann auf diese Weise von vornherein ausgeschlossen werden. Die Verriegelungsnase 76 ist - ebenso wie auch die Werkzeugaufnahme 54 - einstückiger Bestandteil des als Guss- und/oder Schmiedeteil ausgebildeten zweiten Stabilisatorglieds 16.

Um ein mehrstufiges Verspannen eines mit dem Stabilisator 10 ausgestatteten Unterlenkers zu ermöglichen, sind insgesamt vier Verriegelungsnasen 76 kreuzförmig am Umfang des zweiten Stabilisatorglieds 16 ausgeformt. Die Verriegelungsnasen 76 sind zur Erhöhung der Steifigkeit zusätzlich durch bogenförmige Versteifungsrippen 78 miteinander verbunden.

Die als Guss- und/oder Schmiedeteil gefertigte Sperrklappe 62 weist die Form einer das erste Stabilisatorglied 12 zumindest teilweise umgreifenden bzw. umkragenden Halbschale auf. Die Halbschale läuft einenends in zwei gegenüberliegende Scharnierlaschen 80 aus, in denen miteinander fluchtende Bohrungen 82 zur Aufnahme eines quer zur gemeinsamen Längsachse 14 verlaufenden Scharnierbolzens 84 und damit zur Herstellung einer schwenkbaren Verbindung mit dem ersten Stabilisatorglied 12 ausgebildet sind. Anderenends sind zwei gegenüberliegende Sperrwangen 86 vorgesehen, von denen jede eine separate gabelförmige Ausnehmung 88 zur beidseitigen Ineingriffnahme einer zugehörigen Verriegelungsnase 76 aufweist, sodass sich eine zwischen den beiden Stabilisatorgliedern 12 und 16 auftretende Federbewegung blockieren lässt, wenn sich die Sperrklappe 62 in der geschlossenen Stellung befindet.

Die Breite der Verriegelungsnasen 76 ist derart gewählt, dass unabhängig von der Stellung der beiden Stabilisatorglieder 12 und 16 zueinander stets eine ausreichende Überdeckung mit den beiden Sperrwangen 86 gegeben ist. Auf diese Weise ist gewährleistet, dass sich die Verriegelungsnasen 76 und damit das zweite Stabilisatorglied 16 auch unter Last mit vergleichsweise geringem Widerstand innerhalb der Ausnehmungen 88 drehen lassen.

Optional kann an der Sperrklappe 62 anstelle der beiden Sperrwangen 86 auch ein einseitiger Anschlag in Bezug auf eine zwischen den beiden Stabilisatorgliedern 12 und 16 auftretende Einfederbewegung ausgebildet sein, wie er in der DE 10 2009 001 907 A1 vorgeschlagen wird. Um in diesem Fall ein gegenseitiges Verspannen der Unterlenker an einem Dreipunkgeräteanbau zu ermöglichen, sind für jede der beiden möglichen Bewegungsrichtungen separate Stabilisatoren 10 vorzusehen.

Eine an der Sperrklappe 62 angeordnete Zuglasche 90 ermöglicht ein in Fig. 1 angedeutetes Herausschwenken der Sperrklappe 62 aus der geschlossenen Stellung und damit eine Freigabe einer zwischen den beiden Stabilisatorgliedern 12 und 16 auftretenden Ein- und Ausfederbewegung. Hierzu ist die Zuglasche 90 mittels einer Zugfeder 92 mit einer entsprechenden Befestigungsstelle am Traktor verbindbar.

## Patentansprüche

1. Stabilisator für einen Unterlenker eines Dreipunktgeräteanbaus eines Traktors, mit einem ersten Stabilisatorglied (12) und einem mit dem ersten Stabilisatorglied (12) federbeweglich verbundenen zweiten Stabilisatorglied (16), wobei sich das zweite Stabilisatorglied (16) gegenüber dem ersten Stabilisatorglied (12) zur Anpassung der Stabilisatorlänge verdrehen lässt, mit einem schwenkbar an dem ersten Stabilisatorglied (12) angelenkten Sicherungsbügel (58), der zur Verdrehsicherung der beiden Stabilisatorglieder (12, 16) mit einem am Umfang des zweiten Stabilisatorglieds (16) ausgebildeten Sicherungsschlitz (60) in Eingriff bringbar ist, und mit einer Sperrklappe (62), die zur Blockierung einer zwischen den Stabilisatorgliedern (12, 16) auftretenden Federbewegung in eine geschlossene Stellung schwenkbar ist, wobei ein dem Sicherungsbügel (58) in Schwenkrichtung zugewandter Sperrklappenabschnitt (64) derart ausgeformt ist, dass sich der Sicherungsbügel (58) unter Freigabe des zweiten Stabilisatorglieds (16) auch dann aus dem Sicherungsschlitz (60) herausschwenken lässt, wenn sich die Sperrklappe (62) in der geschlossenen Stellung befindet, **dadurch gekennzeichnet, dass** der Sperrklappenabschnitt (64) den Sicherungsbügel (58) schützend verdeckt.

2. Stabilisator nach Anspruch 1, **dadurch gekennzeichnet, dass** der Sicherungsbügel (58) derart an dem ersten Stabilisatorglied (12) angelenkt ist, dass dieser unter Vorspannung stehend in den Sicherungsschlitz (60) gepresst wird.

3. Stabilisator nach Anspruch 2, **dadurch gekennzeichnet, dass** der Sicherungsbügel (58) derart an dem ersten Stabilisatorglied (12) angelenkt ist, dass sich die Wirkrichtung der Vorspannung beim Herausschwenken des Sicherungsbügels (58) umkehrt, wenn ein vorgegebener Schwenkwinkel überschritten wird.

4. Stabilisator nach einem der Ansprüche 1 bis 3, **dadurch gekennzeichnet, dass** die Sperrklappe (62) mittels des Sicherungsbügels (58) in einer vollständig geöffneten Stellung arretierbar ist.

5. Stabilisator nach einem der Ansprüche 1 bis 4, **dadurch gekennzeichnet, dass** der Sicherungsschlitz (60) in Richtung einer zwischen dem ersten Stabilisatorglied (12) und dem zweiten Stabilisatorglied (16) auftretenden Federbewegung orientiert ist.

6. Stabilisator nach einem der Ansprüche 1 bis 5, **dadurch gekennzeichnet, dass** der Sicherungsschlitz (60) in einer am Umfang des zweiten Stabilisatorglieds (16) ausgeformten Verriegelungsnase (76) ausgebildet ist.

7. Stabilisator nach Anspruch 6, **dadurch gekennzeichnet, dass** die Verriegelungsnase (76) einstückiger Bestandteil des als Guss- und/oder Schmiedeteil ausgebildeten zweiten Stabilisatorglieds (16) ist.

8. Stabilisator nach Anspruch 6 oder 7, **dadurch gekennzeichnet, dass** insgesamt vier Verriegelungsnasen (76) kreuzförmig am Umfang des zweiten Stabilisatorglieds (16) ausgeformt sind.

9. Stabilisator nach Anspruch 8, **dadurch gekennzeichnet, dass** eine an der Sperrklappe (62) vorgesehene Ausnehmung (88) zumindest eine der Verriegelungsnasen (76) in der geschlossenen Stellung beidseitig in Eingriff nimmt.

10. Stabilisator nach einem der Ansprüche 1 bis 9, **dadurch gekennzeichnet, dass** der Sicherungsbügel (58) an seinem freien Ende einen ösenförmig aufgeweiteten Griffbereich (72) aufweist.

## Claims

1. Stabilizer for a lower link of a three-point hitch of a tractor, having a first stabilizer member (12) and a second stabilizer member (16) which is connected to the first stabilizer member (12) in a resiliently movable manner, wherein the second stabilizer member (16) is able to be rotated relative to the first stabilizer member (12) in order to adapt the stabilizer length, having a curved securing member (58) which is pivotably articulated to the first stabilizer member (12) and which can be brought into engagement with a securing slot (60) which is formed in the periphery of the second stabilizer member (16) in order to rotationally secure the two stabilizer members (12, 16), and having a locking flap (62) which can be pivoted into a closed position in order to block a resilient movement which occurs between the stabilizer members (12, 16), wherein a locking flap portion (64) which faces the curved securing member (58) in the pivot direction is formed in such a manner that the curved securing member (58), with the second stabilizer member (16) being released, can also be pivoted out of the securing slot (60) when the locking flap (62) is located in the closed position, **characterized in that** the locking flap portion (64) covers the curved securing member (58) in a protective manner.

2. Stabilizer according to Claim 1, **characterized in that** the curved securing member (58) is articulated to the first stabilizer member (12) in such a manner that it is pressed with pretensioning into the securing slot (60).

3. Stabilizer according to Claim 2, **characterized in that** the curved securing member (58) is articulated to the first stabilizer member (12) in such a manner that the active direction of the pretensioning when the curved securing member (58) is pivoted outwards is reversed when a predetermined pivot angle is exceeded.

4. Stabilizer according to one of Claims 1 to 3, **characterized in that** the locking flap (62) can be secured by means of the curved securing member (58) in a completely open position.

5. Stabilizer according to one of Claims 1 to 4, **characterized in that** the securing slot (60) is orientated in the direction of a resilient movement which occurs between the first stabilizer member (12) and the second stabilizer member (16).

6. Stabilizer according to one of Claims 1 to 5, **characterized in that** the securing slot (60) is formed in a locking projection (76) which is formed on the periphery of the second stabilizer member (16).

7. Stabilizer according to Claim 6, **characterized in that** the locking projection (76) is an integral component of the second stabilizer member (16) which is constructed as a cast and/or forged component.

8. Stabilizer according to Claim 6 or 7, **characterized in that** a total of four locking projections (76) are formed on the periphery of the second stabilizer member (16) in a crossed manner.

9. Stabilizer according to Claim 8, **characterized in that** a recess (88) provided in the locking flap (62) engages with at least one of the locking projections (76) at both sides in the closed position.

10. Stabilizer according to one of Claims 1 to 9, **characterized in that** the curved securing member (58) has at the free end thereof a gripping region (72) which widens in the manner of an eyelet.

## Revendications

1. Stabilisateur pour barre d'attelage inférieure d'un attelage trois points d'un tracteur, avec un premier élément de stabilisateur (12) et un deuxième élément de stabilisateur (16) relié de façon élastiquement mobile au premier élément de stabilisateur (12), dans lequel le deuxième élément de stabilisateur (16) peut tourner par rapport au premier élément de stabilisateur (12) pour l'adaptation de la longueur du stabilisateur, avec un étrier de sécurité (58) articulé de façon pivotante sur le premier élément de stabilisateur (12), qui peut être mis en prise avec une fente de sécurité (60) formée à la périphérie du deuxième élément de stabilisateur (16) pour caler en rotation les deux éléments de stabilisateur (12, 16), et avec un capot de blocage (62), qui peut pivoter dans une position fermée pour le blocage d'un mouvement élastique entre les éléments de stabilisateur (12, 16), dans lequel une partie de capot de blocage (64) tournée vers l'étrier de sécurité (58) dans la direction de pivotement est configurée de telle manière que l'étrier de sécurité (58) puisse sortir en pivotant de la fente de sécurité (60) en libérant le deuxième élément de stabilisateur (16), lorsque le capot de blocage (62) se trouve dans la position fermée, **caractérisé en ce que** la partie de capot de blocage (64) recouvre en le protégeant l'étrier de sécurité (58).

2. Stabilisateur selon la revendication 1, **caractérisé en ce que** l'étrier de sécurité (58) est articulé sur le premier élément de stabilisateur (12), de telle manière qu'il soit pressé dans la fente de sécurité (60) en se trouvant en état de précontrainte.

3. Stabilisateur selon la revendication 2, **caractérisé en ce que** l'étrier de sécurité (58) est articulé sur le premier élément de stabilisateur (12), de telle manière que la direction d'action de la précontrainte s'inverse lors de la sortie par pivotement de l'étrier de sécurité (58), lorsqu'un angle de pivotement prédéterminé est dépassé.

4. Stabilisateur selon l'une quelconque des revendications 1 à 3, **caractérisé en ce que** le capot de blocage (62) peut être bloqué dans une position entièrement ouverte au moyen de l'étrier de sécurité (58).

5. Stabilisateur selon l'une quelconque des revendications 1 à 4, **caractérisé en ce que** la fente de sécurité (60) est orientée dans la direction d'un mouvement élastique se produisant entre le premier élément de stabilisateur (12) et le deuxième élément de stabilisateur (16).

6. Stabilisateur selon l'une quelconque des revendications 1 à 5, **caractérisé en ce que** la fente de sécurité (60) est formée dans un ergot de verrouillage (76) créé à la périphérie du deuxième élément de stabilisateur (16).

7. Stabilisateur selon la revendication 6, **caractérisé en ce que** l'ergot de verrouillage (76) est un composant en une seule pièce du deuxième élément de stabilisateur (16) constitué par une pièce coulée et/ou forgée.

8. Stabilisateur selon la revendication 6 ou 7, **caractérisé en ce qu'**au total quatre ergots de verrouillage (76) sont formés en croix à la périphérie du deuxième élément de stabilisateur (16).

9. Stabilisateur selon la revendication 8, **caractérisé en ce qu'**un évidement (88) prévu sur le capot de blocage (62) s'engage de part et d'autre sur au moins un ergot de verrouillage (76) dans la position fermée.

10. Stabilisateur selon l'une quelconque des revendications 1 à 9, **caractérisé en ce que** l'étrier de sécurité (58) présente à son extrémité libre une région de saisie (72) élargie en forme d'oeillet.
